Europäisches Patentamt

European Patent Office

Office européen des brevets

(11) Veröffentlichungsnummer: **0 513 562 A1**

## (12) EUROPÄISCHE PATENTANMELDUNG

(21) Anmeldenummer: **92106794.8**

(22) Anmeldetag: **21.04.92**

(30) Priorität: **14.05.91 DE 4115708**

(43) Veröffentlichungstag der Anmeldung:
**19.11.92 Patentblatt 92/47**

(84) Benannte Vertragsstaaten:
**DE FR GB IT**

(51) Int. Cl.⁵: **B65G 39/09**, F16C 29/00

(71) Anmelder: **ELECTRO PNEUMATIC
INTERNATIONAL GMBH
Obere Tiefenbachstrasse 8
W-8164 Hausham(DE)**

(72) Erfinder: **Sundseth, Jarl
Rothendaschweg 12a
W-8104 Neuhaus (Schliersee)(DE)**

(74) Vertreter: **Bohnenberger, Johannes, Dr. et al
Meissner, Bolte & Partner
Widenmayerstrasse 48
W-8000 München 22(DE)**

(54) **Fördereinrichtung.**

㊼ Es ist eine Fördereinrichtung mit einer Transportkugel (21) bekannt, die über Lagerkugeln (22) in einer Lagerschale (23) gelagert ist. Federeinrichtungen (26) sind zum federnden Halten der Lagerschale (23) in einem Gehäuse (20) vorgesehen. Die Transportkugel (21) ist mittels eines Halterings (29) auf den Lagerkugeln (22) gehalten. Es sind erste Halteeinrichtungen (28) vorgesehen, um das Gehäuse (20) gegenüber einer auf die Transportkugel (21) wirkenden Kraft im wesentlichen senkrecht zur Oberfläche einer Haltefläche (10) zu halten. Mittels zweiter Sicherungseinrichtung (34) wird das Gehäuse (20) in der Ausnehmung der Haltefläche (10) gehalten. Die-se sitzen am oberen Ende des Gehäuses (20). Zur Vereinfachung des Ein- und Ausbaus wird vorgeschlagen, die Außenkontur der zweiten Halteeinrichtung (34) größer als die des Gehäuses (20) auszubilden und Sicherungseinrichtungen (35, 36) zum Fixieren in der Haltefläche (10) vorzusehen und dabei die zweite Halteeinrichtung (34) derart auszubilden, daß sie nach Lösen der Sicherungseinrichtungen (35, 36) als selbstständiges Teil fortnehmbar und dadurch das Gehäuse mit den darin befindlichen Teilen aus der Ausnehmung 13, 14 in der Haltefläche (10) herausnehmbar ist.

EP 0 513 562 A1

FIG. 5

Die Erfindung betrifft eine Fördereinrichtung nach dem Oberbegriff des Patentanspruches 1.

Derartige Fördereinrichtungen sind aus der DE 38 05 494 A1 oder der US 3,739,894 bekannt. Sie dienen zum Bewegen von Frachtbehältern im Frachtraum von Flugzeugen beim Be- oder Entladen. Durch diesen Anwendungsbereich ist vorgegeben, daß die Fördereinrichtungen zum einen leicht, zum anderen aber dennoch sehr robust sein müssen. Auch sollen die Fördereinrichtungen möglichst einfach aufgebaut sein, damit der Preis nicht zu hoch wird.

Selbst dann, wenn die Fördereinrichtungen sehr robust sind, können sie beschädigt werden. In solchen Fällen müssen die montierten Einrichtungen ausgebaut und durch neue ersetzt werden. Dieser Vorgang darf keine allzu lange Zeit in Anspruch nehmen, um die Standzeiten der Flugzeuge gering zu halten.

Die bekannten Fördereinrichtungen sind zum einen relativ aufwendig gebaut, was die Forderungen nach geringem Preis unerfüllbar machen, zum anderen ist die Montage der bekannten Einrichtungen aufwendig und erfordert Fingerspitzengefühl.

Der Erfindung liegt die Aufgabe zugrunde, eine Fördereinrichtung der eingangs genannten Art dahingehend weiterzubilden, daß die Handhabung bei einfachem Aufbau erleichtert wird.

Diese Aufgabe wird dadurch gelöst, daß die Außenkontur der Halteeinrichtungen, welche das Gehäuse gegen ein Herausrutschen aus der Ausnehmung in der Haltefläche sichern, größer ist als die des Gehäuses, und daß diese Halteeinrichtungen Sicherungseinrichtungen zum Fixieren in der Haltefläche aufweisen und derart ausgebildet sind, daß sie nach Lösen der Sicherungseinrichtungen als selbstständige Teile fortnehmbar und danach das Gehäuse mit den darin befindlichen Teilen aus der Ausnehmung in der Haltefläche herausnehmbar ist. Dadurch wird erreicht, daß die leichten und einfach aufzubauenden Halteeinrichtungen im eingebauten Zustand spielfrei passen, durch ihr geringes Gewicht jedoch dennoch leicht herausnehmbar sind. Das die gelagerte Kugel und alle weiteren Teile enthaltende schwere Gehäuse kann dann in einer größeren Öffnung mit Spiel sitzen, so daß das Herausnehmen wesentlich erleichtert ist. Weiterhin wird durch die separate Ausbildung und Handhabung der Halteeinrichtung erreicht, daß das Gehäuse sehr viel einfacher herzustellen bzw. aus einfacheren Teilen aufbaubar ist.

Zum Abstützen des Gehäuses entgegen der transportwirkenden Kraft werden dessen Unterrand sowie eine Abstützfläche in der Haltefläche benutzt. Diese Abstützung an der Unterseite wirkt zusammen mit der vorgenannten Halteeinrichtung so zusammen, daß das Gehäuse im eingebauten Zustand fixiert bzw. spielfrei in der Haltefläche sitzt. Dies ist besonders dann leicht erreichbar, wenn der Unterrand und die Abstützfläche formschlüssig miteinander in Eingriff stehen.

Vorzugsweise umfaßt die zweite Halteeinrichtung zum Sichern des Gehäuses gegen ein Herausnehmen eine Innenausnehmung mit im wesentlichen kreisförmigem Querschnitt, in welcher die durch den Haltering in der Lagerschale gehaltene Transportkugel senkrecht zur Haltefläche verschiebbar geführt ist. Die Führung beim Einfedern wird also durch eben diese zweite Halteeinrichtung bewirkt.

Vorzugsweise umfassen die Sicherungseinrichtungen der zweiten Halteeinrichtung elastisch verformbare erste Sicherungseinrichtungen, die derart ausgebildet sind, daß die zweiten Halteeinrichtungen in der Ausnehmung der Haltefläche in Schnappsitz kraftschlüssig festsetzbar sind. Die Ausgestaltung dieser Sicherungseinrichtungen ist also derart, daß dann, wenn eine nach oben, das Gehäuse aus der Haltefläche herausbewegende genügend große Kraft auftritt, die Sicherungseinrichtungen nachgeben und die Halteeinrichtungen herausnehmbar sind. Hierbei ist es von Vorteil, wenn in der Nähe der ersten Sicherungseinrichtungen in der zweiten Halteeinrichtung eine Öffnung vorgesehen ist, in welche ein Werkzeug zum Heraushebeln der zweiten Halteeinrichtung einsetzbar ist. Ein solches Werkzeug kann beispielsweise ein einfacher Schraubenzieher sein. Wichtig ist hierbei, daß keine komplizierte Verschlußmechanik betätigt, z. B. ein Riegel zurückgeschoben werden muß.

Die ersten Sicherungseinrichtungen werden vorzugsweise paarig ausgebildet, und zwar symmetrisch zur vorgenannten Öffnung. Diametral zur Öffnung gegenüber wird eine zweite Sicherungseinrichtung vorgesehen, die starr ausgebildet ist und in einer Ausnehmung der Haltefläche formschlüssig festsetzbar ist. Dadurch ist gewährleistet, daß das Gehäuse in äußerst einfacher Art gegen Verdrehung gesichert ist.

Vorzugsweise umfaßt der Haltering zum Halten der Transportkugel einen oberen zylindrischen Abschnitt, dessen Außendurchmesser im wesentlichen dem Innendurchmesser der Innenausnehmung in der zweiten Halteeinrichtung entspricht. Durch diese Form-Kombination ist die eingangs erwähnte Linearführung in einfachster Weise sichergestellt.

Vorzugsweise sind der Haltering und die Lagerschale als Blechformteile ausgebildet und miteinander zur Bildung einer Lagereinheit fest verbunden. Hierzu eignet sich eine Umbördelung. Auch das Gehäuse ist vorzugsweise als Blechformteil ausgebildet und nimmt den Haltering mit Transportkugel, Lagerkugeln und Lagerschale auf. Diese für sich alleine gesehen schon funktionsfähige Einheit ist über die Feder im Gehäuse gehalten, wobei die Feder vorgespannt ist. Um die Anordnung, bestehend aus Feder und Lagereinheit, zusammenzuhalten, ist es von Vorteil, wenn der Innenraum des Gehäuses an beiden Enden Abschnitte verringerten Durchmessers aufweist, z. B. Einbördelungen.

Weitere bevorzugte Ausführungsformen der Erfindung ergeben sich aus den Unteransprüchen und der nachfolgenden Beschreibung von bevorzugten Ausführungsbeispielen, die anhand von Abbildungen näher erläutert werden. Hierbei zeigen:

Fig. 1    eine perspektivische Teilschnitt-Darstellung einer Haltefläche im unbearbeiteten Zustand;

Fig. 2    einen Schnitt durch die Haltefläche nach Fig. 1 mit darin angebrachter Montageöffnung;

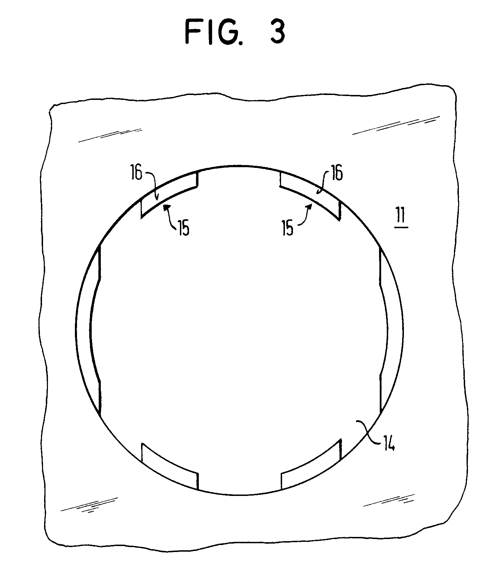

Fig. 3    Draufsicht auf eine Haltefläche mit Öffnung;

Fig. 4.    eine Draufsicht auf eine Fördereinrichtung, die in einer Haltefläche eingesetzt ist;

Fig. 5    einen Schnitt entlang der Linie V-V aus Fig. 4;

Fig. 6    eine alternative Ausführungsform in einer Schnittdarstellung gemäß der nach Fig. 5;

Fig. 7    eine Seitenansicht einer zweiten Halteeinrichtung gemäß Fig. 5/6;

Fig. 8    eine Draufsicht auf eine weitere Ausführungsform in einer Ansicht gemäß Fig. 4;

Fig. 9    einen Schnitt entlang der Linie IX-IX aus Fig. 8, und

Fig. 10    eine Seitenansicht auf eine zweite Halteeinrichtung gemäß Fig. 9.

In der nachfolgenden Beschreibung werden für gleiche oder gleichwirkende Teile dieselben Bezugsziffern gewählt.

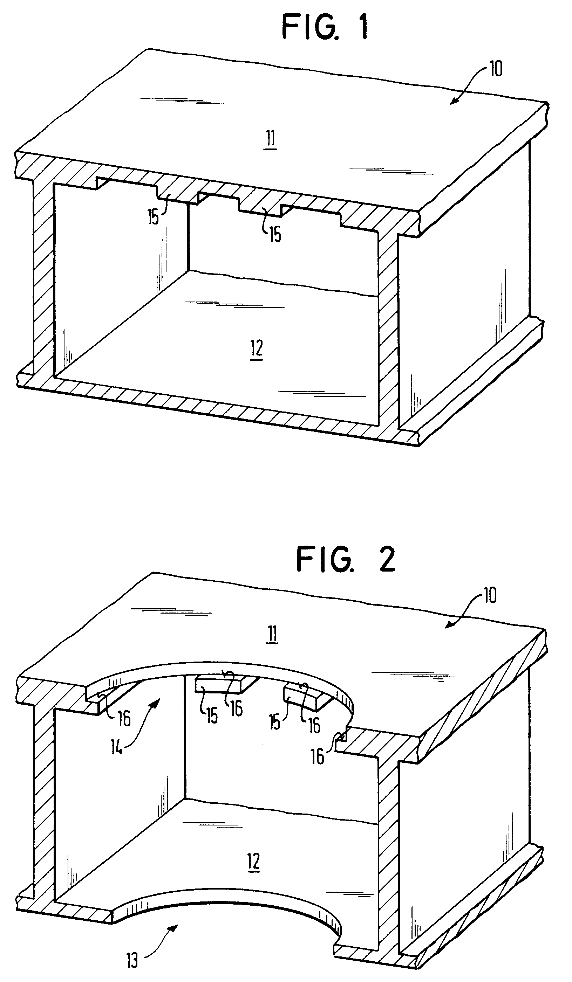

Wie in Fig. 1 gezeigt, umfaßt eine Haltefläche 10 eine obere Fläche 11 und eine untere Fläche 12, die über senkrechte Stege miteinander verbunden sind. Die obere Fläche 11 ist an ihrer Unterseite mit Verstärkungsrippen 15 versehen. Die Haltefläche 10 wird im allgemeinen als Strangpreßprofil hergestellt.

Für die Montage einer Fördereinrichtung wird zunächst eine Bohrung in eine Haltefläche 10 eingebracht, welche sowohl die obere Fläche 11 als auch die untere Fläche 12 durchsetzt. Auf diese Weise entstehen eine zunächst zylindrische obere Ausnehmung 14 und eine zylindrische untere Ausnehmung 13.

Danach wird die obere Bohrung im oberen Teil erweitert (ausgefräst) und zwar bis zu einer Tiefe, welche die Verstärkungsrippen 15 im wesentlichen stehenläßt. Auf den Verstärkungsrippen 15 werden somit Sitzflächen 16 gebildet. Die so bearbeitete Haltefläche 10 dient zur Aufnahme aller nachfolgend beschriebenen Ausführungsformen von Fördereinrichtungen.

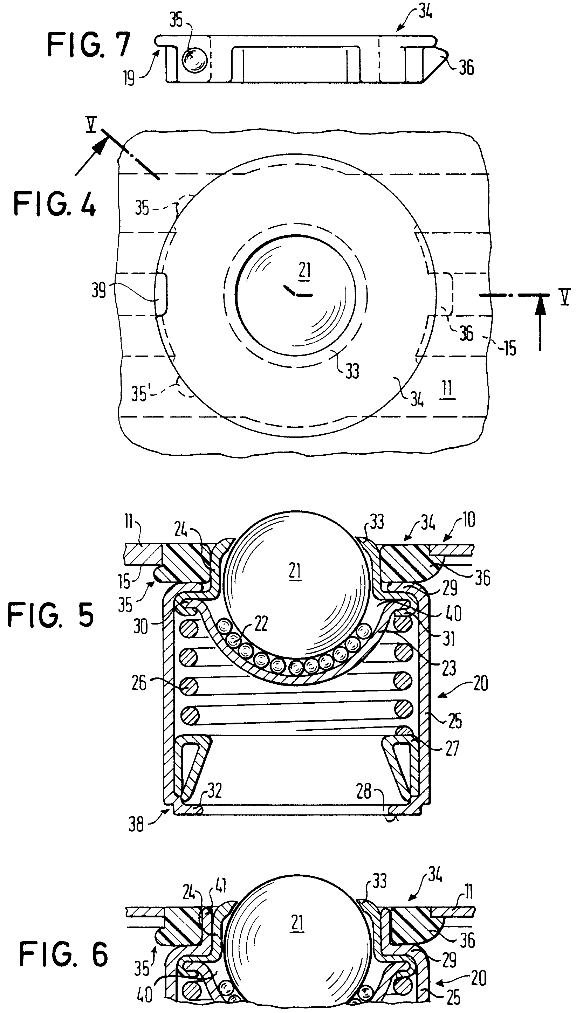

Im folgenden wird anhand der Figuren 4, 5 und 7 eine erste bevorzugte Ausführungsform der erfindungsgemäßen Fördereinrichtung erläutert.

Die hier gezeigte Ausführungsform der erfindungsgemäßen Fördereinrichtung umfaßt eine Transportkugel 21, die über Lagerkugeln 22 in einer Lagerschale 23 drehbar gehalten ist. Die Lagerschale 23 weist einen nach außen ragenden Schalenrand 30 auf.

Um die Transportkugel 21 in der Lagerschale 23 auf den Lagerkugeln 22 zu halten, ist ein Haltering 24 vorgesehen. Dieser weist einen unteren Rand auf, der auf dem Schalenrand 30 aufliegt und um diesen herum gebördelt ist. Die Umbördelung ist mit der Bezugsziffer 31 bezeichnet.

Vom unteren, frontal nach außen verlaufenden Rand des Halterings 24 erstreckt sich ein im wesentlichen zylindrischer Abschnitt nach oben, der an seinem Oberrand 33 nach innen in Richtung auf die Transportkugel 21 gebogen ist. Die so gebildete obere Öffnung des Halterings 24 weist einen Durchmesser auf, der kleiner ist als derjenige der Transportkugel 21, so daß diese nicht durch den Haltering 24 nach oben austreten kann, sondern sicher auf den Lagerkugeln 22 gehalten ist.

Die so gebildete Lagereinheit 40 sitzt in einem Gehäuse 20, das einen im wesentlichen ringförmigen Querschnitt aufweist. Der Innendurchmesser des Gehäuses 20 ist hierbei etwas größer als der Außendurchmesser des Halterings 24 an seinem größten Umfang, so daß die Lagereinheit 40 im Gehäuse 20 längs dessen Mittelachse verschiebbar ist.

Das Gehäuse 20 weist an seinem oberen Ende einen Bördelabschnitt 29 verringerten Durchmessers auf, so daß die Lagereinheit 40 bei Bewegung nach oben an diesen Bördelabschnitt 29 anstößt.

Der Gehäuseunterrand 28 des Gehäuses 20 ist ebenfalls nach innen eingebördelt und bildet so einen Endring 32. Im Übergangsbereich zwischen dem Endring 32 und dem zylindrischen Außenmantel 25 des Gehäuses 20 befindet sich eine ringförmige Kerbe 38, die als Abstützfläche dient, wie dies weiter unten näher beschrieben wird. Im Gehäuse 20 ist in Anschlag mit dessen Endring 32 eine Federstütze 27 mit im wesentlichen kreisförmigem Querschnitt gebildet. Auf der Federstütze 27 sitzt eine Schraubenfeder 26 mit ihrem unteren Ende, deren oberes Ende auf der Umbördelung 31 aufsitzt und so aufgrund ihrer Vorspannung beim Einbau die Lagereinheit 40 nach oben in Anschlag auf den Bördelabschnitt 29 drückt.

Im eingebauten Zustand sitzt das Gehäuse 20 derart in der Haltefläche 10, daß der Endring 32 in der Öffnung 13 (Fig. 2) sitzt und die Abstützfläche 38 auf der Oberfläche der unteren Fläche 12 aufliegt. Dadurch ist ein Formschluß gegeben, so daß ein seitliches Verrutschen des Gehäuses 20 relativ zur unteren Ausnehmung 13 nicht möglich ist.

Das Gehäuse 20 wird gegen seitliches Verrutschen zur oberen Ausnehmung 14 und gegen ein Herausrutschen nach oben durch eine Halteeinrichtung 34 gesichert. Diese weist einen Umfangsrand auf, der auf seiner Unterseite einen Sitzrand 19 bildet, mit welchem die Halteeinrichtung 34 auf den Sitzflächen 16 (Fig. 2) aufliegt.

Die Halteeinrichtung 34 weist eine im wesentlichen zylindrische Innenausnehmung auf, die in ihrem Durchmesser so gestaltet ist, daß der zylindrische Abschnitt des Halterings 24 in der Halteeinrichtung 34 nach oben und unten verschiebbar, aber in Umfangs- bzw. Radialrichtung festgehalten ist.

Die Halteeinrichtung 34 ist aus einem elastischen Kunststoffmaterial gefertigt und weist am Umfang zwei erste Sicherungseinrichtungen 35 auf, die als halbkugelförmige Nasen oder dergleichen ausgebildet sind. Diese ersten Sicherungseinrichtungen 35 sind in einer derartigen Höhe angebracht, daß sie dann, wenn die Halteeinrichtung 34 mit ihrem Sitzrand 19 auf den Sitzflächen 16 aufsitzt, unter die Verstärkungsrippen 15 eingreifen. Diese Ausführungsform ist in Fig. 5 gezeigt. Bei der Ausführungsform nach Fig. 4 ist der Anbringungsort der ersten Sicherungseinrichtung 35, 35' derart, daß sie in die Lücken zwischen jeweils zwei Verstärkungsrippen 15 eingreifen. Aber auch in diesem Fall ist ein direkter Kontakt zwischen den Sicherungseinrichtungen 35 und dem Material der oberen Fläche 11 gegeben.

Zwischen den zwei Sicherungseinrichtungen 35 ist in der Halteeinrichtung 34 eine Öffnung 39 eingebracht, in welche ein Werkzeug, z. B. ein Schraubenzieher, einsetzbar ist. Die Anordnung der Öffnung 39 zu den Sicherungseinrichtungen 35, 35' ist symmetrisch.

Diametral gegenüber der Öffnung 39 weist die Halteeinrichtung 34 eine zweite Sicherungseinrichtung 36 auf, die als Zunge ausgestaltet ist und zwischen zwei Verstärkungsrippen 15 im wesentlichen bündig einsetzbar ist.

Bei der Montage der hier gezeigten Ausführungsform der erfindungsgemäßen Fördereinrichtung wird zunächst die Lagereinheit 40 gebildet. Daraufhin wird die Lagereinheit 40 zusammen mit der Feder 26 und der Federstütze 27 in das Gehäuse 20 eingesetzt, dessen oberer Rand zunächst noch mit dem zylindrischen Außenmantel 25 des Gehäuses 20 fluchtend ausgebildet ist. Daraufhin wird der Oberrand zur Bildung des Abschnittes 29 eingebördelt.

Die so ausgebildete Einheit kann nun sehr leicht und ohne viel Fingerspitzengefühl in die Haltefläche 10 bzw. in die darin ausgebildeten Ausnehmungen 13 und 14 eingesetzt werden. Daraufhin wird die Halteeinrichtung 34 aufgesetzt und zwar derart, daß die zweite Sicherungseinrichtung 36 in eine Lücke zwischen zwei Verstärkungsrippen 15 eingehakt wird. Daraufhin kann die Halteeinrichtung 34 im gegenüberliegenden Bereich nach unten derart gedrückt werden, daß die ersten Sicherungseinrichtungen 35 am Rand der oberen Ausnehmung 14 aufsitzen. Bei einem weiteren Eindrücken verformt sich die Halteeinrichtung 34 im Bereich der ersten Sicherungseinrichtungen 35, so daß diese nach unten rutschen können, bis die ersten Sicherungseinrichtungen 35 nach außen schnappen und so die Halteeinrichtung 34 in der oberen Ausnehmung 14 festsetzen. Damit ist gleichzeitig das Gehäuse 20 mit der darin befindlichen Lagereinheit 40 zum einen zentriert, zum anderen gegen Herausrutschen in der Haltefläche 10 gehalten.

Dann, wenn eine Kraft mit einer vertikalen Komponente auf die Lastkugel 21 wirkt, die groß genug ist, um die Vorspannkraft der Feder 26 zu überwinden, wird die Lagereinheit 40 nach unten, entgegen der Kraft der Feder 26 in das Gehäuse 20 hineingedrückt. Die Führung wird hierbei durch den Kontakt zwischen dem Haltering 24 und der Innenausnehmung der Halteeinrichtung 34 sichergestellt.

Will man das Gehäuse 20 mit der darin befindlichen Lagereinheit 40 wieder herausnehmen, so setzt man die Klinge eines Schraubenziehers in die Öffnung 39 und hebelt die Halteeinrichtung 34 aus der oberen Ausnehmung 13 heraus, wobei der Schnappsitz der ersten Sicherungseinrichtungen 35 entgegen dem oben beschriebenen Einsetzvorgang gelöst wird. Nach Fortnehmen der Halteeinrichtung 34 kann man die Einheit 20/40 ergreifen und nach oben herausnehmen. Die Demontage ist somit ebenso wie die Montage mit wenigen Handgriffen durchführbar.

Bei der weiteren, in Fig. 6 im Teilschnitt gezeigten Ausführungsform weist das Gehäuse 20 in seinem oberen Bereich einen zylindrischen Kragen 41 auf, der sich vom Bördelabschnitt 29 nach oben erstreckt. Die Innenkontur des Kragens 41 ist zylindrisch. In diesem zylindrischen Teil des Kragens 41 ist nun der Haltering 24 längs verschiebbar geführt. Diese Ausführungsform der Erfindung unterscheidet sich also von der nach Fig. 5 dadurch, daß Relativbewegungen lediglich zwischen der Lagereinheit 40 und dem Gehäuse 20 stattfinden, wenn die Lagereinheit 40 nach unten verschoben wird.

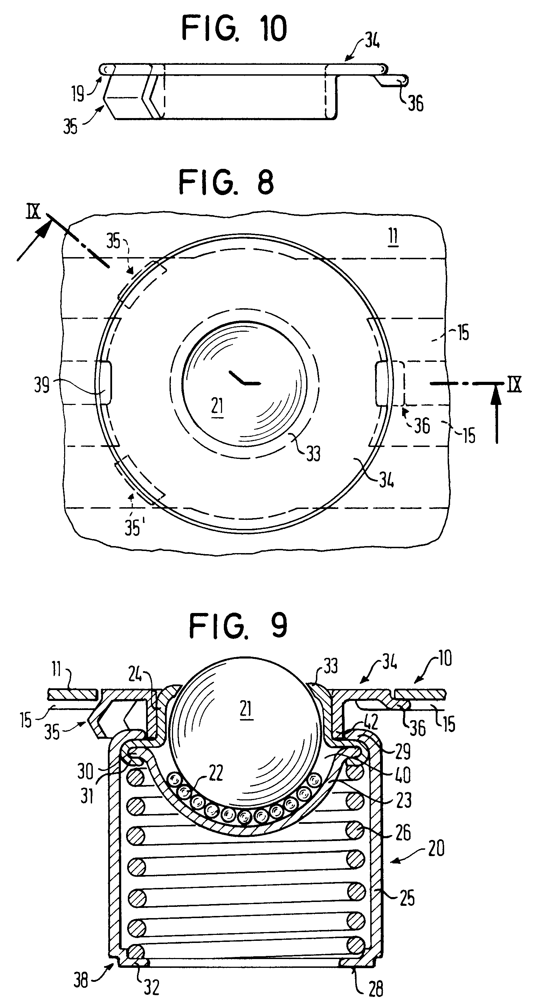

In den Figuren 8 - 10 ist eine weitere Ausführungsform der Erfindung gezeigt, die sich von der Ausführungsform nach den Figuren 4, 5 und 7 nur durch die Ausbildung der Halteeinrichtung 34 unterscheidet. Bei dieser Ausführungsform der Erfindung sitzt der Unterrand 42 der Halteeinrichtung 34 im wesentlichen in der Öffnung, welche vom Bördelabschnitt 29 des Gehäuses 20 offengelassen ist. Dadurch ist eine noch bessere Zentrierwirkung der Halteeinrichtung für das Gehäuse 20 bewirkt.

Weiterhin weisen die ersten Sicherungseinrichtungen 35, 35' eine andere Querschnittsform auf, als die der zuvor gezeigten Ausführungsform. Bei einer geeigneten Formgebung kann somit die Halteeinrichtun 34 z. B. aus einer hinreichend elastischen Aluminiumlegierung geformt (z. B. tiefgezogen) werden.

Bezugszeichenliste

| | |
|---|---|
| 10 | Haltefläche |
| 11 | Obere Fläche |
| 12 | Untere Fläche |
| 13 | Untere Ausnehmung |
| 14 | Obere Ausnehmung |
| 15 | Verstärkungsrippe |
| 16 | Sitzfläche |
| 19 | Sitzrand |
| 20 | Gehäuse |
| 21 | Transportkugel |
| 22 | Lagerkugel |
| 23 | Lagerschale |
| 24 | Haltering |
| 25 | Außenmantel |
| 26 | Federeinrichtung |
| 27 | Federstütze |
| 28 | Gehäuseunterrand |
| 29 | Bördelabschnitt |
| 30 | Schalenrand |
| 31 | Umbördelung |
| 32 | Endring |
| 33 | Oberrand |
| 34 | Halteeinrichtung |
| 35, 35' | Erste Sicherungseinrichtungen |
| 36 | Zweite Sicherungseinrichtungen |
| 38 | Abstützfläche |
| 39 | Öffnung |
| 40 | Lagereinheit |
| 41 | Kragen |
| 42 | Kragen-Unterrand |

**Patentansprüche**

1. Fördereinrichtung mit einer Transportkugel (21), die über Lagerkugeln (22) in einer Lagerschale (23) gelagert ist, mit einem Haltering (29) zum Halten der Transportkugel (21) auf den Lagerkugeln (22), mit einer Federeinrichtung (26) zum federnden Halten der Lagerschale (23) in einem Gehäuse (20), mit ersten Halteeinrichtungen (28) zum Abstützen des Gehäuses (20) gegenüber einer auf die Transportkugel (21) wirkenden Kraft im wesentlichen senkrecht zur Oberfläche einer Haltefläche (10) an einem unteren, der Transportkugel (21) gegenüberliegenden Ende des Gehäuses (20) und mit einer zweiten Halteeinrichtung (34) zum Sichern des Gehäuses (20) in der Ausnehmung (13, 14) am oberen Ende des Gehäuses (20) derart, daß die Transportkugel (21) im unbelasteten Zustand durch die zweiten Halteeinrichtungen hindurch und über die Oberfläche der Haltefläche (10) hinausragt,
**dadurch gekennzeichnet,**
   - daß die Außenkontur der zweiten Halteeinrichtung (34) größer ist als die des Gehäuses (20),
   - daß Sicherungseinrichtungen (35, 36) zum Fixieren in der Haltefläche (10) vorgesehen sind, und
   - daß die zweite Halteeinrichtung (34) derart ausgebildet ist, daß sie nach Lösen der Sicherungseinrichtungen (35, 36) als selbstständiges Teil fortnehmbar und dadurch das Gehäuse (20) mit den darin befindlichen Teilen aus der Ausnehmung (13, 14) in der Haltefläche herausnehmbar ist.

2. Fördereinrichtung nach Anspruch 1, dadurch gekennzeichnet, daß die ersten Halteeinrichtungen den Unterrand (28) des Gehäuses (20) sowie eine Abstützfläche (38) zum Abstützen auf der Haltefläche (10) umfassen.

3. Fördereinrichtung nach Anspruch 2, dadurch gekennzeichnet, daß die Abstützfläche (38) mit dem Rand der unteren Ausnehmung (13) formschlüssig in Eingriff bringbar ist.

4. Fördereinrichtung nach einem der vorhergehenden Ansprüche, dadurch gekennzeichnet, daß die zweite Halteeinrichtung (34) eine Innenausnehmung mit im wesentlichen kreisförmigem Querschnitt aufweist, in welcher die durch den Haltering (24) in der Lagerschale (23) gehaltene Transportkugel (21) senkrecht zur Haltefläche (10) verschiebbar geführt ist.

5. Fördereinrichtung nach einem der vorhergehenden Ansprüche, dadurch gekennzeichnet, daß die Sicherungseinrichtungen der zweiten Halteeinrichtung (34) elastisch verformbare erste Sicherungseinrichtungen (35) umfassen, die derart ausgebildet sind, daß die zweite Halteeinrichtung (34) in der Ausnehmung (14) der Haltefläche (10) in Schnappsitz kraftschlüssig festsetzbar ist.

6. Fördereinrichtung nach Anspruch 5, dadurch gekennzeichnet, daß die zweite Halteeinrichtung (34) in der Nähe der ersten Sicherungseinrichtungen (35) eine Öffnung (39) aufweisen, in welche ein Werkzeug zum Heraushebeln der zweiten Halteeinrichtung (34) aus der Ausnehmung (14) unter Öffnung des Schnappsitzes einführbar ist.

7. Fördereinrichtung nach Anspruch 6, dadurch gekennzeichnet, daß die zweite Halteeinrichtung (34) zwei erste Sicherungseinrichtungen (35, 35') und zwischen diesen die Öffnung (39) sowie eine zweite Sicherungseinrichtung (36) zur Transportkugel (21) diametral gegenüber der Öffnung (39) aufweisen, wobei die zweite Sicherungseinrichtung (36) starr ausgebildet und in der Ausnehmung (14) der Haltefläche (10) formschlüssig festsetzbar ist.

8. Fördereinrichtung nach Anspruch 4, dadurch gekennzeichnet, daß der Haltering (24) einen oberen zylindrischen Abschnitt aufweist, dessen Außendurchmesser im wesentlichen im Innendurchmesser der Innenausnehmung in der zweiten Halteeinrichtung (34) entspricht.

9. Fördereinrichtung nach einem der vorhergehenden Ansprüche, dadurch gekennzeichnet, daß der Haltering (24) und die Lagerschale (23) als Blechformteile ausgebildet und miteinander zur Bildung einer Lagereinheit (40) fest verbunden sind.

10. Fördereinrichtung nach Anspruch 9, dadurch gekennzeichnet, daß der Haltering (24) und die Lagerschale (23) mittels einer Umbördelung (31) miteinander verbunden sind.

11. Fördereinrichtung nach einem der Ansprüche 9 oder 10 dadurch gekennzeichnet, daß das Gehäuse (20) einen im wesentlichen zylindrischen Innenraum aufweist, in welchem die Lagereinheit (40) entgegen der Kraft der Federeinrichtung (26) verschiebbar geführt ist.

12. Fördereinrichtung nach Anspruch 11, dadurch gekennzeichnet, daß der Innenraum des Gehäuses (20) an beiden Enden Abschnitte (29, 32) verringerten Durchmessers aufweist.

13. Fördereinrichtung nach einem der vorhergehenden Ansprüche, dadurch gekennzeichnet, daß das Gehäuse (20) als Blechformteil ausgebildet ist.

# FIG. 1

# FIG. 2

# FIG. 3

FIG. 7

FIG. 4

FIG. 5

FIG. 6

# FIG. 10

19  
35  
34  
36

# FIG. 8

IX  
35  
11  
39  
21  
15  
IX  
36  
15  
33  
34  
35'

# FIG. 9

11  
24  
33  
34  
10  
15  
35  
21  
42  
36  
15  
30  
31  
22  
29  
40  
23  
26  
20  
25  
38  
32  
28

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2 113 311 (DEUTSCHE STAR KUGELHALTER) <br> * das ganze Dokument * <br> --- | 1,4,9,10 | B65G39/09 <br> F16C29/00 |
| A | EP-A-0 162 484 (THE BOEING COMPANY) <br> * Abbildungen 1,2 * <br> --- | 1-6,11 | |
| D,A | US-A-3 739 894 (HINMAN) <br> * Abbildungen 3,4 * <br> --- | 1-3,8-12 | |
| D,A | DE-A-3 805 494 (BAVARIA CARGO TECHNOLOGIE) <br> * Abbildung 1 * <br><br> ----- | 1 | |

| | RECHERCHIERTE SACHGEBIETE (Int. Cl.5 ) |
|---|---|
| | B60B <br> B65G <br> F16C |

Der vorliegende Recherchenbericht wurde für alle Patentansprüche erstellt

| Recherchenort | Abschlußdatum der Recherche | Prüfer |
|---|---|---|
| BERLIN | 18 AUGUST 1992 | SIMON J. |